# EUROPEAN PATENT SPECIFICATION

(11) **EP 1 619 855 B1**
(45) Date of publication and mention of the grant of the patent: **07.05.2008**
(21) Application number: 05015096.0
(22) Date of filing: 12.07.2005
(51) Int. Cl.: H04L 29/06

(54) **System and method for managing and checking socket connections between a server and clients.**
System und Verfahren zur Verwaltung und Prüfung von Socketverbindungen zwischen einem Server und Clients
Système et procédé de gestion et vérification des connexions socket entre un serveur et des clients.

(30) Priority: 21.07.2004 KR 2004056963
(43) Date of publication of application: 25.01.2006
(73) Proprietor: SAMSUNG ELECTRONICS CO., LTD., Suwon-si, Gyeonggi-do (KR)
(72) Inventor: Paek, Seung-Hak, Bungdang-gu Seongnam-si Gyeonggi-do (KR)
(74) Representative: Lang, Johannes

(56) References cited:
- EP-A- 1 170 909
- US-A1- 2002 087 697
- US-A1- 2004 044 771
- STERRITT R ET AL: "Personal autonomic computing self-healing tool" ENGINEERING OF COMPUTER-BASED SYSTEMS, 2004. PROCEEDINGS. 11TH IEEE INTERNATIONAL CONFERENCE AND WORKSHOP ON THE BRNO, CZECH REPUBLIC 24-27 MAY 2004, PISCATAWAY, NJ, USA,IEEE, 24 May 2004 (2004-05-24), pages 513-520, XP010711521 ISBN: 0-7695-2125-8

## Description

### BACKGROUND OF THE INVENTION

### 1. Field of the Invention

The present invention relates to socket management between a server and a client. More particularly, the present invention relates to a system adapted to manage and check a socket connections between servers or equipment having Berkeley Software Distribution (BSD)-based, Unix-based, or Linux-based operating systems and to disconnect or reconnect socket connections when an abnormal connection occurs.

### 2. Description of the Related Art

Servers or equipment having BSD-based, Unix-based, or Linux-based operating systems (OSs) have several application programs which are executed therein. The application programs generally use a connection-oriented protocol such as the Transmission Control Protocol (TCP) to perform communication therebetween. The TCP is a connection-oriented protocol which is reliable and provides full-duplex communication and a continuous stream of bytes. The TCP provides an error check function, a retransmission function and a stream control function for the reliable transmission of data. Thus, the application programs which are executed in the servers and the equipment recognizes a connection therebetween according to the TCP protocol, and transmits/receives messages to/from each other using the connection.

Most operating systems employ a socket as an interface for a connection-oriented protocol, and the respective application programs manage sockets necessary for respective connections.

Connection-oriented sockets are implemented such that a connection between a server and a client can be established or released in a normal state and can also be released when the other party's connection is disconnected. However, in the event that power of the other party which is either of the server and the client is off or a slot is removed from equipment having removable slots, a socket connection is not immediately released but is maintained during a relatively long time. In addition, since the socket connection is regarded as being maintained, it is determined as being capable of transceiving information internally, which leads to an abnormal operation. In particular, a real-time system can undergo more serious problems.

Besides, it is necessary to release an existing socket connection for reconnection when the connection between the server and the client is disconnected due to a certain abnormal operation, but when this situation is not recognized, an error can occur in which the abnormal operation state is continuously maintained.

A server creates sockets to communicate with a first client and a second client. Even though a power supply interruption occurs in the second client, the server does not recognize this fact and transmits data to the second client, resulting in a data transmission error.

Socket connection management is performed using a technique called "Keepalive" which is one standard socket option. However, a default keepalive time is 2 hours (7200 seconds) and there is no message exchanged therebetween, and thus it is impossible to rapidly establish a reconnection.

In order to resolve the problem, most application programs check a socket connection using their own special methods. That is, the application programs have different socket connection management methods. Similar functions must be implemented in all of the application programs, thereby resulting in unnecessary duplication of functions.

Also, the respective socket connection management is not consistently performed, and thus it is difficult to determine whether a problem results from a connection problem between a server and a client or an operation problem between corresponding application programs, thereby resulting in difficult and complicated system management.

Furthermore, in the prior art, a common library is not mounted on the server or the client, but provided separately to connect between the server and the client, which can raise difficulties for managing the socket and checking any malfunctions of the socket.

The patent application US 2004/0044771 A1 with the title "*Method and Apparatus for a Client Connection Manager"* discloses a method and apparatus for a connection manager. By providing for persistent connections with clients, the connection manager allows for servers to communicate with clients, which would otherwise be inaccessible.

The paper *"*Personal Automatic Computing Self-Healing Tool" (Proceedings. 11th IEEE international conference and workshop on Engineering of Computer-Based Systems, Brno, Czech Republic, 24-27 May 2004; Piscataway, NJ, USA, IEEE, 24 May 2004, pages 513-520, ISBN: 0-7695-2125-8) by Roy Sterritt and Saulai Chung is aimed at developing a proof of concept self-healing tool for the personal computing environment operating in a peer-to-peer mode and consisting of a pulse monitor and a vital signs health monitor. The prototype developed in Java, JNI and C utilising UDP to communicate to its peers proved the feasibility of the pulse and vital signs concepts and their ability to provide some self-healing properties within a PC environment. The functionality also opens new opportunities to provide self-configuring, self-optimising and self-protecting autonomic capabilities to personal computing.

The patent application US 2002/0087697 A1 with the title *"Permanent TCP Connections across System Reboots"* discloses that network or mobile clients are enabled to keep their connections open across shutdowns and reboots of computer systems. Transactions are suspended while the client system is down, and resumed when it comes back up, allowing end-users to perform orderly shutdowns or their systems (especially useful to save battery power on mobile systems) without risk of losing transactions on open TCP connections.

### SUMMARY OF THE INVENTION

It is, therefore, an object of the present invention to provide a system adapted to manage socket connections and a method of checking socket connections to reduce unnecessary work of application program modules which are driven between a server and a client to manage socket connections.

According to one aspect of the invention, a system for managing socket connections includes: at least one application program module adapted to create a socket necessary to communicate with a server or a client and to call an Application Program Interface API to check a socket connection of the created socket to manage the created socket; a common library module containing a program adapted to perform an operation set in the called API upon the API being called from the application program module; and a socket check execution module, created by executing the coded program in the common library module, and adapted to periodically check the socket connection of the created socket, wherein the API includes at least one of: a server initialization API adapted to create the socket check execution module; a server registration API adapted to register the socket in the created socket check execution module to check a socket connection of a certain socket; a server registration cancel API adapted to cancel registration of a socket registered in the socket check execution module and to check the socket connection; a server process API adapted to process a socket check message from the client; and a server release API adapted to release registration of all sockets registered in the socket check execution module and to release the socket check execution module, and wherein the common library module includes at least one of: a program adapted to perform a function defined to correspond to a call of a server initialization API to create the socket check execution module; a program adapted to perform a function defined to correspond to a call of a server registration API to register a socket in the created socket check execution module to check a certain socket connection; a program adapted to perform a function defined to correspond to a call of a server registration cancel API to cancel registration of the socket registered in the socket check execution module and whose socket connection is being checked; a program adapted to perform a function defined to correspond to a call of a server process API to process a socket check message received from the client; and a program adapted to perform a function defined to correspond to a call of a server release API to release registration of all socket registered in the socket check execution module and the socket check execution module.

According to another aspect of the invention, a method of checking socket connections includes: an application program module creating a socket, the application program module programmed to create and manage the socket necessary to communicate with one of a server and a client; the application program module calling an Application Program Interface API defined to check a socket connection of the created socket; a common library module executing a program to perform an operation set in the called API upon the API being called by the application program module; and a socket check execution mode, created by executing the program in the common library module, periodically checking a socket connection of the created socket, wherein the API includes at least one of: a server initialization API adapted to create the socket check execution module; a server registration API adapted to register the socket in the created socket check execution module to check a socket connection of a certain socket; a server registration cancel API adapted to cancel registration of a socket registered in the socket check execution module and to check the socket connection; a server process API adapted to process a socket check message from the client; and a server release API adapted to release registration of all sockets registered in the socket check execution module and to release the socket check execution module, and wherein the common library module includes at least one of: a program adapted to perform a function defined to correspond to a call of a server initialization API to create the socket check execution module; a program adapted to perform a function defined to correspond to a call of a server registration API to register a socket in the created socket check execution module to check a certain socket connection; a program adapted to perform a function defined to correspond to a call of a server registration cancel API to cancel registration of the socket registered in the socket check execution module and whose socket connection is being checked; a program adapted to perform a function defined to correspond to a call of a server process API to process a socket check message received from the client; and a program adapted to perform a function defined to correspond to a call of a server release API to release registration of all socket registered in the socket check execution module and the socket check execution module.

According to yet another aspect of the invention, a method of checking socket connections of a socket in a server which sets the socket with a client includes: an application program module calling a library function storing a program to check a socket connection of a corresponding socket upon the socket with a client being set; a common library module registering a socket to be periodically checked by executing the called library function; and a socket check execution module periodically transmitting a socket check request message to the client by executing the called library function and periodically checking a socket connection of the registered socket according to whether or not a socket check response message has been received from the corresponding client, wherein checking the socket connection of the socket includes: determining whether or not the socket check response message has been received from the client before timeout of a preset transmission period after the socket check request message to check the socket connection of the socket has been transmitted to the client; and releasing a socket connection upon there being no response message as a result of the determination and the number of times that the timeout of the transmission period has occurs exceeding a preset threshold value.

According to still another aspect of the invention, a method of checking socket connections of a socket in a client that sets the socket with a server includes: an application program module calling a library function storing a program to check a socket connection of a corresponding socket upon the socket with the server being set; and a socket check execution module periodically transmitting a socket check response message in response to a socket check request message periodically received from the server by executing the called library function and checking the socket connection of the socket set with the server according to whether or not the socket check request message has been periodically received, wherein checking the socket connection of the socket includes: determining whether or not the socket check request message has been received from the server before timeout of a preset transmission period after the socket check response message has been transmitted to the server; and releasing the socket connection upon the socket check request message not being received within the timeout of the transmission period as a result of the determination and the number of times that the timeout of the transmission period has occurred exceeds a preset threshold value.

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings, in which like reference symbols indicate the same or similar components, wherein:
FIG. 1 is a view of errors occurring in a connection-oriented socket;
FIG. 2 is a view of a configuration of a server-client network system which employs a system of managing socket connections in accordance with an embodiment of the present invention;
FIG. 3 is a block diagram of a configuration of a socket management system which operates in a server in accordance with an embodiment of the present invention;
FIG. 4 is a block diagram of a configuration of a socket management system which operates in a client in accordance with an embodiment of the present invention;
FIG. 5 is a view of a health check message for checking a socket connection in accordance with an embodiment of the present invention;
FIG. 6 is a view of states of a client;
FIG. 7 is a view of managing a socket in a server using a socket management system in accordance with an embodiment of the present invention;
FIG. 8 is a flowchart of the operation of a socket check execution module in a server in accordance with an embodiment of the present invention;
FIG. 9 is a flowchart of the operation of a socket check execution module in a server which periodically checks a socket connection of a registered socket in accordance with an embodiment of the present invention;
FIG. 10 is a flowchart of socket checking by a socket check execution module in a client in accordance with the present invention;
FIG. 11 is a view of the transmission of health check messages between a server and a client in accordance with an embodiment of the present invention;
FIG. 12 is a view of finding and processing a client problem using a health check message in accordance with the present invention; and
FIG. 13 is a view of finding and processing a server problem using a health check message in accordance with the present invention.

### DETAILED DESCRIPTION OF THE INVENTION

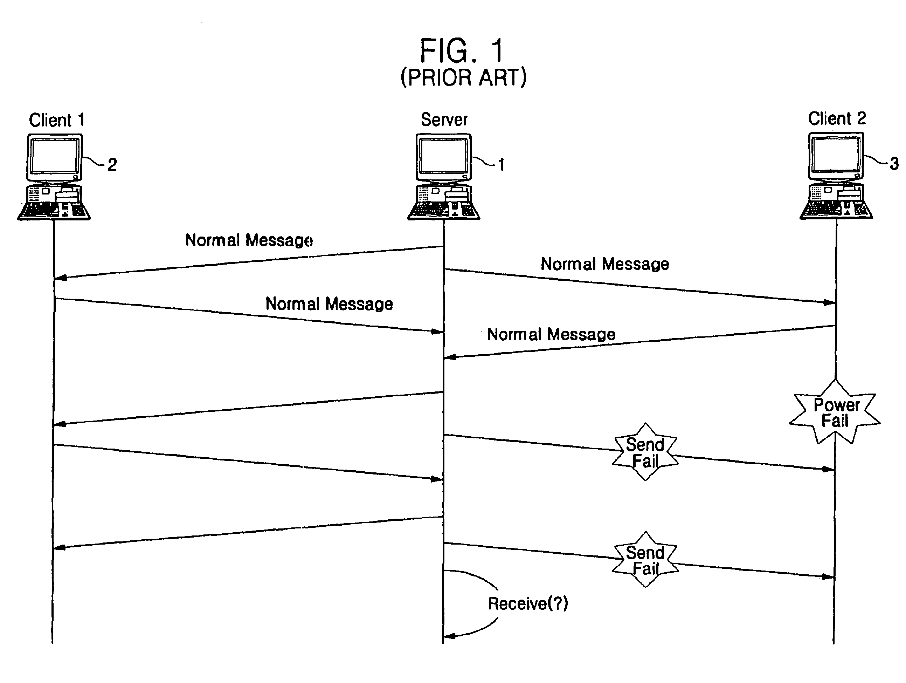

FIG. 1 is a view of errors occurring in a connection-oriented socket.

Referring to FIG. 1, a server 1 creates sockets to communicate with a first client 2 and a second client 3. Even though a power supply interruption occurs in the second client 3, the server 1 does not recognize this fact and transmits data to the second client 3, resulting in a data transmission error.

Socket connection management is performed using a technique called "Keepalive" which is one standard socket option. However, a default keepalive time is 2 hours (7200 seconds) and there is no message exchanged therebetween, and thus it is impossible to rapidly establish a reconnection.

In order to resolve the problem, most of application programs check a socket connection using their own special methods. That is, the application programs have different socket connection management methods. This requires functions to be implemented in all of the application programs, thereby resulting in unnecessary duplication.

Also, socket connection management is not consistently performed, and thus it is difficult to determine whether a problem results from a connection problem between a server and a client or an operation problem between corresponding application programs, making it difficult and complicated to manage the system.

The present invention will now be described more fully hereinafter with reference to the accompanying drawings, in which exemplary embodiments of the present invention are shown. This invention can, however, be embodied in different forms and should not be construed as being limited to the embodiments set forth herein. Rather, these embodiments are provided so that this disclosure will be thorough and complete, and will fully convey the scope of the present invention to those skilled in the art. In the drawings, like numbers refer to like elements throughout the specification.

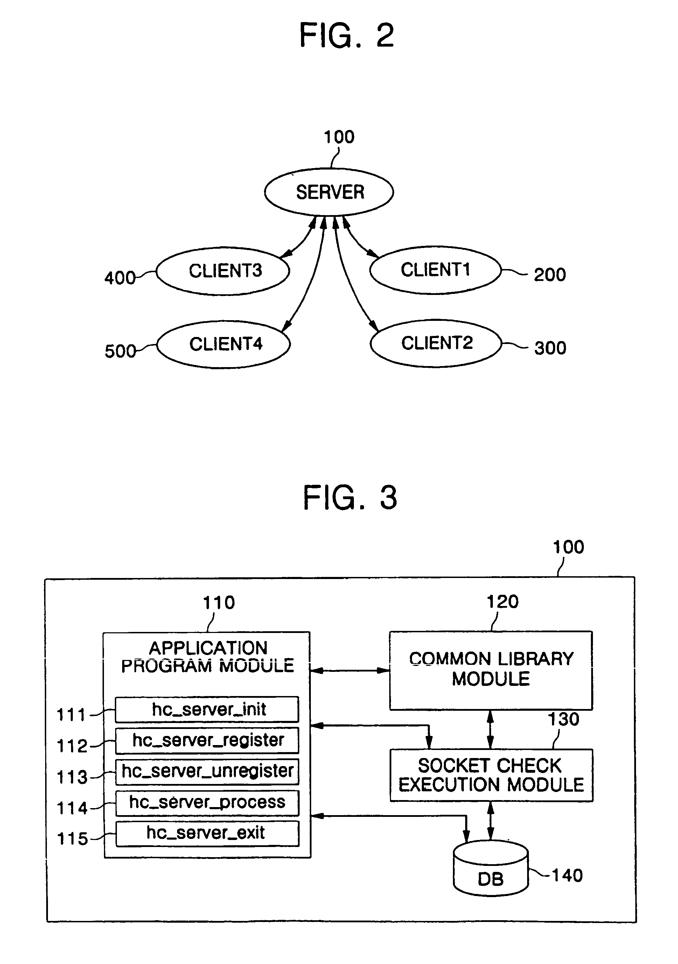

FIG. 2 is a view of a configuration of a server-client network system employing a system of managing socket connections in accordance with an embodiment of the present invention.

Referring to FIG. 2, a server 100 and a plurality of clients 200, 300, 400 and 500 are connected through a network. A server application program module driven in the server 100 and a client application program driven in the respective clients 200, 300, 400 and 500 are connected through socket communication.

The server application program module which is being driven in the server 100 sets a socket which is required for communication with the client application program module which is being driven in the respective clients 200, 300, 400 and 500 and which periodically checks a socket connection.

The respective application program modules driven in the server 100 or the respective clients 200, 300, 400 and 500 perform a process programmed therein to provide various services. Thus, the application program modules can be implemented in various forms according to the kind of service provided by the server 100 or the respective clients 200, 300, 400 and 500.

In addition, the application program module can include various kinds of software application program modules which are operated in various digital processing devices by a server-client based communication protocol.

Also, since the application program module operates with the server-client based communication protocol, when it is executed in the server 100 or the respective clients 200, 300, 400 and 500, it creates a socket for communication between the application program modules which are being driven in the server 100 and the respective clients 200, 300, 400 and 500 and it releases a connection of the created socket after the communication has been completed.

The respective application program modules must check the socket connection between the server 100 and the respective clients 200, 300, 400 and 500 in real time. The application program module calls an Application Program Interface (API) to check the socket connection and to perform a socket check with a socket check execution module created by the API.

The respective application program modules create a socket for communication with a certain client and maintain or release the created socket. The configuration and operation of the application program module which calls the API to check a certain socket and to perform a socket check with a socket check execution module created by the API will be explained below in detail.

In an embodiment of the present invention, the application program modules, driven in the server 100 and the respective clients 200, 300, 400 and 500, define APIs for checking a socket connection of sockets set therebetween and call the APIs to periodically check a socket connection of the respective sockets.

The APIs for checking the socket connection are configured to be used in and called by the server 100 and the respective clients 200, 300, 400 and 500. Hereinafter, a socket connection check function of an API is referred to as "a health check (HC or hc)". That is, the APIs for checking the socket connection begin with an "hc".

The server and the client periodically send and receive messages for checking the socket connection of the socket. The server periodically transmits a health check request message HC_REQUEST to the client, and the client transmits a health check response message HC_RESPONSE to the server.

FIG. 3 is a block diagram of a configuration of a socket management system which operates in a server in accordance with an embodiment of the present invention.

Referring to FIG. 3, the socket management system driven in the server includes at least one application program module 110 which creates a socket necessary for communication with a client and calls an API to check a socket connection of a corresponding socket to manage the created socket, a common library module 120 having a program to perform operations set in an API called from the application program module 110, a socket check execution module 130 created by executing the coded program in the common library module 120, the socket check execution module 130 periodically checking a socket connection of a socket created by the application program module 110, and a Database (DB) 140.

The application program module 110 contains APIs that check the socket connection of the sockets. The API defined in the server will be explained below.

A server initialization API (hc_server_init) 111 is an API that creates a thread for an HC function to perform a health check HC. The server initialization API 111 is added to a starting portion of an application program. Hereinafter, the HC function thread is referred to as a socket check execution module.

A server registration API (hc_server_register) 112 is an API that registers a socket so that a socket connection of a certain socket can be checked for the health check HC. The server registration API is added to a position of the application program module where a socket for a server is opened so as to be connected to a client. The socket connected to a client is registered and is then continually checked.

A server registration cancel API (hc_server_unregister) 113 is an API that cancels the registration of a socket being checked for the health check HC. The server registration cancel API 113 is added to a position of the application program module 110 where a socket is normally released. The server registration cancel API 113 releases a connection with a client.

A server process API (hc_server_process) 114 checks whether or not data received from a socket, registered for its socket connection to be checked by the application program module executed in the server, is data for the health check HC. The server process API 114 then processes the checked data. The server process API is for a server and is used when a socket check response message HC_RESPONSE, responsive to a socket check request message HC_REQUEST, has been received.

A server release API (hc_server_exit) 115 is an API that releases all registered sockets and releases the socket check execution module 130.

The common library module 120 includes programs coded to perform operations set in the APIs called from the application program module 110. The common library module 120 includes programs to perform functions defined to respectively correspond to the server initialization API, the server registration API, the server registration cancel API, the server process API, and the server release API.

When the server initialization API (hc_server-init) 111 is called from the application program module 110, the common library module 120 executes the program to perform a function defined to correspond to the server initialization API to create a socket check execution module to be used for the health check HC, thereby preparing to periodically checking a socket connection of a certain socket.

When the server registration API (hc_server-register) 112 is called from the application program module 110, the common library module 120 executes a program to perform a function defined to correspond to the server registration API to register a socket in the created socket check execution module 130 to check a socket connection of a certain socket for the health check HC.

When the server registration cancel API (hc_server-unregister) 113 is called from the application program module 110, the common library module 120 executes a program to perform a function defined to correspond to the server registration cancel API to cancel registration of a socket being checked by the socket check execution module 130. The socket whose registration is canceled in the socket check execution module 130 is then released.

When the server process API (hc_server-process) 114 is called from the application program module 110, the common library module 120 executes a program to perform a function defined to correspond to the server process API to check whether or not a message transmitted from a client is a response message, responsive to a health check request message transmitted to a corresponding client from a server, to vary a state value of the client.

When the server release API (hc_server-exit) 115 is called from the application program module 110, the common library module 120 executes a program to perform a function defined to correspond to the server release API to release registration of all sockets registered in the socket check execution module 130 to check a socket connection of a corresponding socket and to release the corresponding socket check execution module 130.

The socket check execution module 130 is created when the server initialization API is called from the application program module 110 and a program in the common library module 120 performs a function defined to correspond to the server initialization API.

The socket check execution module 130 periodically transmits a health check request message to check a socket connection of a socket designated by the application program module, and checks a socket connection of a corresponding socket according to whether or not a health check response message has been received from a client.

The DB 140 stores ID and state information of each client that creates a socket to communicate with the server.

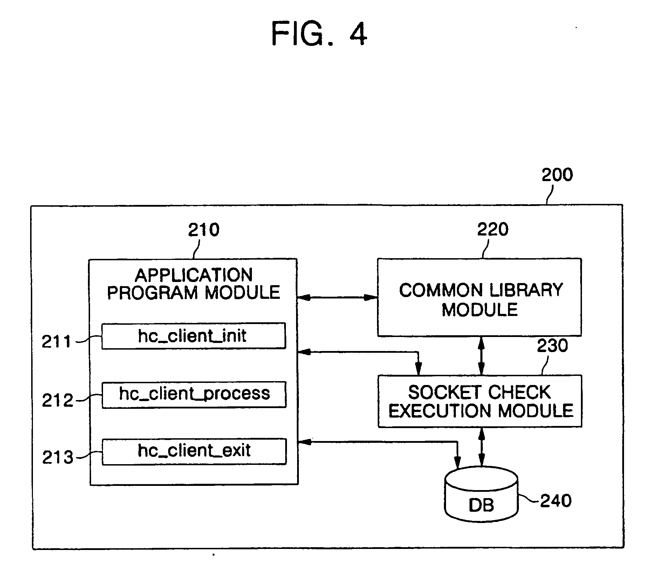

FIG. 4 is a block diagram of a configuration of a socket management system which operates in a client in accordance with an embodiment of the present invention.

Referring to FIG. 4, the socket management system driven in the client includes at least one application program module 210 to call an API for checking a socket connection of a socket, a common library module 220 having a program to perform an operation set in the API called from the application program module 210 when a certain API is called from the application program module 210, a socket check execution module 230 created by executing the program in the common library module 220 and periodically checking the socket connection of the socket created by the application program module 210, and a DB 240.

The application program module 210 includes APIs defined to check the socket connection of the socket. The API defined in the client will be explained below.

The client includes a client initialization API 211, a client process API 212, and a client release API 213 defined therein.

The client initialization API (hc_client_init) 211 is an API to initialize parameters to be used for the health check HC. The client initialization API 211 is positioned in a starting portion of an application program.

The client process API (hc_client_process) 212 checks whether or not the data received from the server 100 is data for the health check HC when the application program module 210 receives data from the server 100. The client process API 212 then processes the checked data. The client process API is an API executed in the client and is used when a socket check request message HC_REQUEST has been received from the server 100.

The client release API (hc_client_exit) 213 is an API to initialize necessary parameters and to end an HC operation.

When a certain API is called from the application program module 210, the common library module 220 includes programs to perform operations set in each of the called APIs. Thus, the common library module 220 includes programs to perform functions defined to respectively correspond to the client initialization API, the client process API, and the client release API.

When the client initialization API (hc_client-init) 211 is called from the application program module 210, the common library module 220 executes a program to perform a function defined to correspond to the client initialization API to perform initialization for a socket check and to create a socket check execution module, thereby preparing to periodically check a socket connection of a socket connected to the server.

When the client process API (hc_client-process) 212 is called from the application program module 210, the common library module 220 executes a program to perform a function defined to correspond to the client process API to determine whether or not a corresponding message received from the server 100 is a health check request message HC_REQUEST.

When the client release API (hc_client-exit) 213 is called from the application program module 210, the common library module 220 executes a program to perform a function defined to correspond to the server release API to release a health check operation and to terminate the corresponding socket check execution module 230.

The socket check execution module 230 is created when the client initialization API is called from the application program module 210 and to execute a program in the common library module 220 to perform a function defined to correspond to the client initialization API.

The socket check execution module 230 periodically receives a health check request message to check a socket connection of a socket designated by the application program module and to transmit a health check response message to the server, thereby commanding the server to check a socket connection of a corresponding socket according to whether or not the health check response message has been received from the client.

The DB 240 stores socket setting information of the server 100 to maintain a socket set with the server 100.

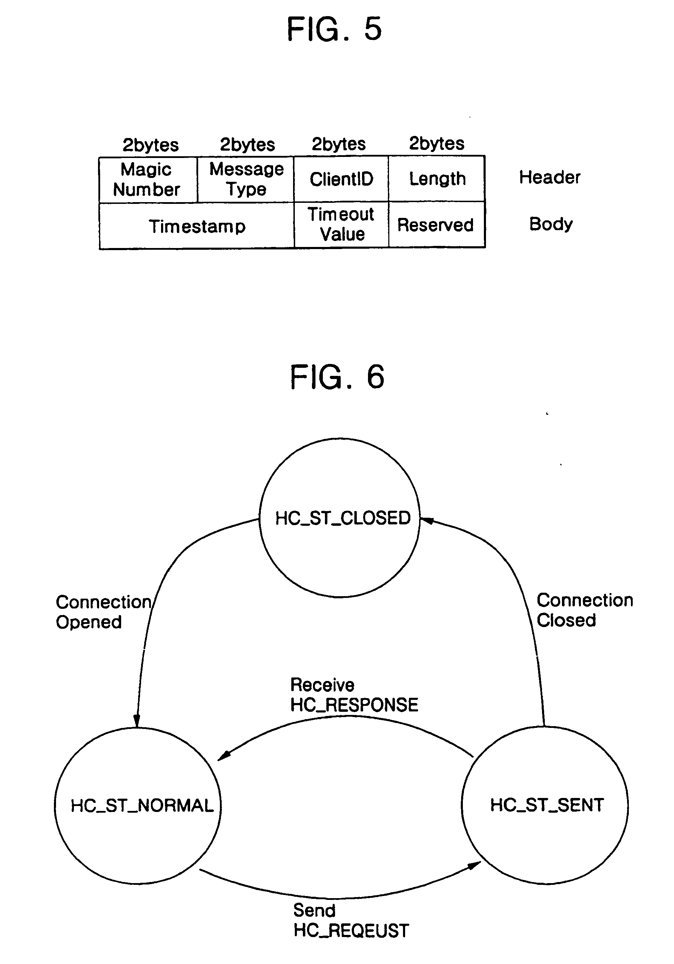

FIG. 5 is a view of a configuration of a health check message to check a socket socket connection in accordance with an embodiment of the present invention.

Referring to FIG. 5, a header of the health check message includes a magic number field, a message type field, a client ID field and a packet length field, and a body thereof includes a time stamp field, a timeout field and a reserved field.

The magic number field, the message type field, the client ID field and the packet length field are each assigned 2 bytes.

A value set in the magic number field is a magic number to check a socket connection of a socket and is set to a specific value to determine whether or not a corresponding message is a health check message. A system time value of the server is set as a value of the magic number field.

A value indicating whether a corresponding message is a health check request message or a health check response message is set in the message type field.

An identifier of a client ID that sets a socket connection with the server is set in the client ID field to discriminate each client.

A message length is set in the packet length field to check a transmission error of a corresponding packet.

Time information that a corresponding packet has been transmitted is set in the time stamp field. When messages are transceived between the server and the client, in order to check whether or not the messages have been normally transceived between the server and the client, the server sets a current time in the time stamp field as a time stamp value and then transmits the current time to the client. The client sets the current time in the health check response message HC_RESPONSE "as is" and then transmits the current time to the server. The server checks whether or not the current time has been exactly transmitted from the client to thereby determine a state of the client.

After the server transmits a health check request message to the client, the elapsed time is measured. When a health check response message has not been received within a predetermined time after the health check request message has been transmitted, a socket connection of a corresponding socket is regarded as being disconnected, and a socket is then forcibly cut off. A timeout value for the predetermined time is set in the timeout field.

When a transmission period Ts of the server is varied, a waiting period Tc of the client must be varied. Thus, a timeout value is set and transmitted whenever the Tc value is varied. It is preferable for Tc to equal Ts+a, where "a" is a tolerance value set by a user.

The server stores state information of the clients to manage the clients. Thus, the DB 140 of the server 100 is configured in an arrangement or linked list form for all respective sockets of the registered clients, and a client ID, a client socket, and a client state are stored therein.

The client can have three states as shown in FIG. 6.

The client transits to a normal state HC_ST_NORMAL from a closed state HC_ST_CLOSED when a socket is registered in the socket check execution module 130 for a socket check, and transits to a sent state HC_ST-SENT when the socket check execution module 130 of the server 100 transmits a health check request message HC_REQUEST to the corresponding client 200. When a health check response message HC_RESPONSE is received from the client 200, it transits to the normal state HC_ST_NORMAL. The server 100 transmits a health check request message HC_REQUEST and then checks a state of the client 200 at the next checking time.

Thus, the clients which have received a health check request message from the server 100 transmit a health check response message to the server 100, and the server 100 determines a state of a corresponding client according to whether or not a health check response message has been received and sets the state of the corresponding client in the DB 140.

The application program module 110 being driven in the server 100 calls a server process API 114 when a certain message has been received from the client. When the server process API 114 is called, the program coded in the common library module 120 is executed to determine whether or not the corresponding message received from the client is a health check response message. When the received message is the health check response message, the state value of the corresponding client is set to the normal state HC_ST_NORMAL.

The normal state HC_ST_NORMAL indicates that the health check response message has been normally received, but when it remains in a sent state HC_ST_SENT, this indicates that there is no response message.

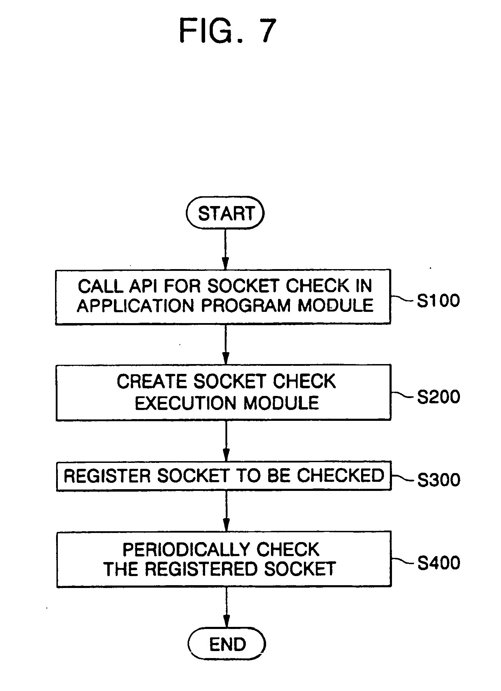

FIG. 7 is a flowchart of managing a socket in a server using a socket management system in accordance with an embodiment of the present invention.

Referring to FIG. 7, when a certain application program module is driven in the server, the application program module performs a process for forming a socket with a set client and calls an API coded therein to check a socket connection of a corresponding socket (S100). When the API is called by the application program module 110, the common library module 120 drives a program defined to correspond to the called API to create a socket check execution module 130 to periodically check the socket connection of the socket (S200).

After creating a socket and a client, the application program module 110 calls an API to register a corresponding socket in the socket check execution module 130 to periodically check the socket connection of the socket. The common library module 120 drives a program defined to correspond to the corresponding API to register the corresponding socket in the socket check execution module 130 to perform a health check of the certain socket (S300).

The socket check execution module 130 periodically checks a socket connection of the registered socket (S400).

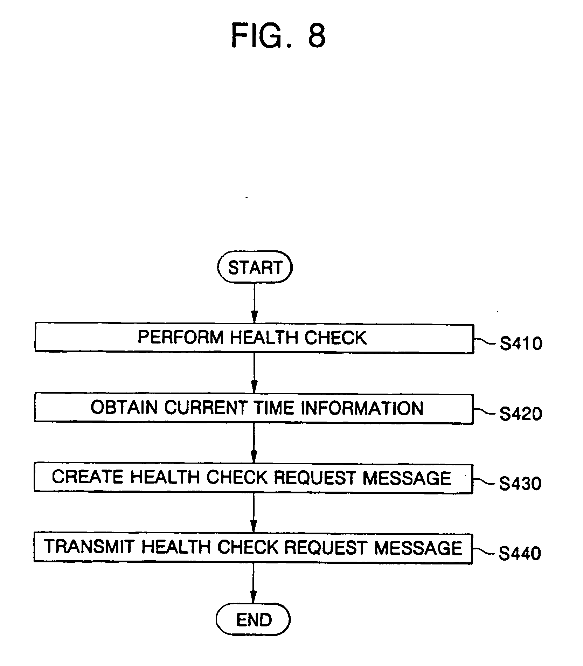

FIG. 8 is a flowchart of a socket check execution module in a server in accordance with an embodiment of the present invention.

Referring to FIG. 8, the socket check execution module 130 created in the server 100 performs a periodical health check for sockets registered therein by a set process (S410).

When the health check is performed once, the socket check execution module 130 obtains current time information (S420) to create a health check request message HC_REQUEST to be transmitted to the clients having a socket registered in a health check list (S430). An ID of a client to set a corresponding socket, current time information and a timeout value are set in a header of the created health check request message.

The socket check execution module 130 transmits the created health check request message HC_REQUEST to the clients that set the socket (S440).

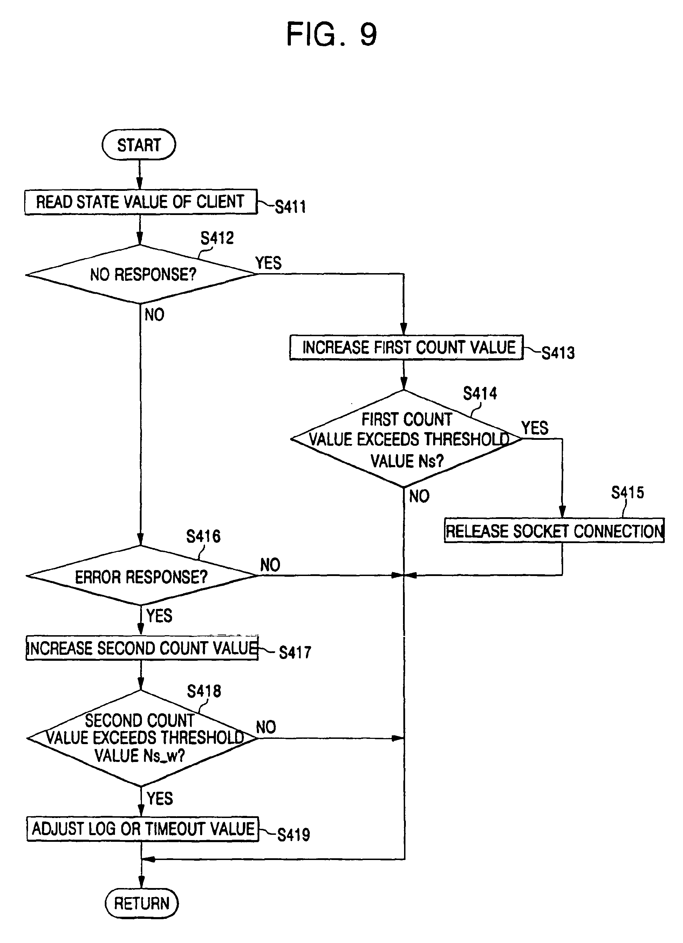

FIG. 9 is a flowchart of a socket check execution module in a server to periodically check a socket connection of a registered socket in accordance with the present invention.

Referring to FIG. 9, the socket check execution module 130 reads a state value of a corresponding client set in the DB 140 (S411) to determine whether or not a state of the client is a no response state (S412). When the state of the client is a normal state HC_ST_NORMAL, the client is determined to have normally received a message, but when the client remains in a sent state HC_ST_SENT, it is determined to be in a no response state.

When the client is determined to be in a no response state as a result of the determination of the step S412, a first count value is increased (S413). A determination is made as to whether or not the first count value exceeds a first set threshold value Ns (S414). The first threshold value Ns is the maximum number of times that the server 100 waits for a response from the clients 200 and 300 from which no response has been sent.

As a result of the determination, when the first set count value exceeds the first threshold value Ns, a connection to the corresponding clients 200 and 300 is released (S415).

When the state value of the clients 200 and 300 is a response state, a determination is made as to whether or not there is an error response (S416). When there is a response but responses from the clients 200 and 300 which are different in magic number value have an error, a second count value is increased (S417). Then,a determination is made as to whether or not the second count value exceeds a second set threshold value Ns_w (S418). The second threshold value Ns_w is the maximum number of times that the server 100 waits for a continuous response with an error from the clients 200 and 300 which are different in magic number value.

When the second count value exceeds the second set threshold value Ns_w, a log or timeout value is adjusted (S419).

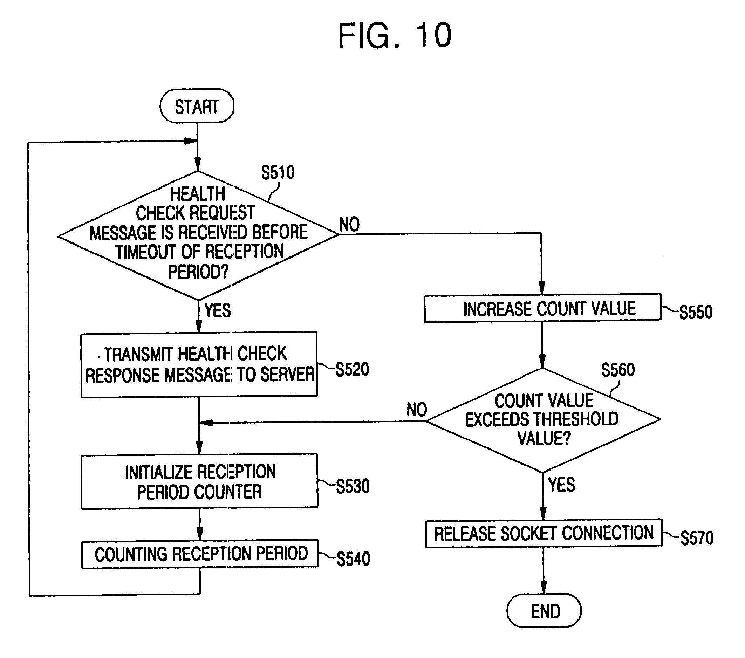

FIG. 10 is a flowchart of a socket check operation of a socket check execution module in a client in accordance with the present invention.

Referring to FIG. 10, the socket check execution module 230 of the client determines whether or not a health check request message HC_REQUEST has been received from a server 100 before timeout of a reception period (S510). When it is determined that the health check request message HC_REQUEST has been received as a result of the determination of the step S510, a health check response message HC_RESPONSE is transmitted to the server 100 (S520).

When the health check response message HC_RESPONSE is transmitted to the server 100, the socket check execution module 230 initializes a reception period counter (not shown) before newly measuring the reception period (S540).

When the health check request message HC_REQUEST has not been received before the timeout of the reception period and exceeds the timeout of the reception period, the number of time periods after the timeout of the reception period is counted to increase a count value (S550), and a determination is made as to whether or not the count value exceeds the threshold value (S560).

When the count value does not exceed the threshold value, the reception period counter is initialized (S530) to perform a process of measuring the reception period (S540). However, when the count value exceeds the threshold value, a socket connection is released (570).

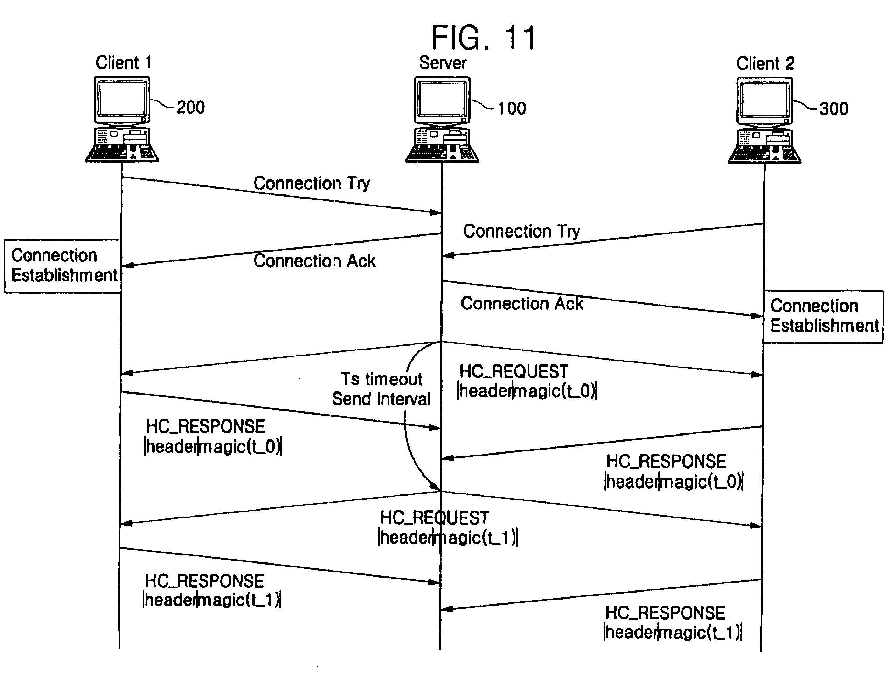

FIG. 11 is a view of the transmission of health check messages between a server and a client in accordance with an embodiment of the present invention.

A health check function of a socket is implemented by using health check data periodically transmitted between a server 100 and clients 200 and 300, and timers of both sides. The server 100 transmits a health check request message HC_REQUEST, and the clients 200 and 300 transmit a health check response message HC_RESPONSE in response thereto.

In FIG. 11, Ts denotes a period that the server 100 transmits the health check request message HC_REQUEST to the clients 200 and 300, and when a timeout of Ts occurs, the server 100 checks a state of the clients and transmits the health check request message HC_REQUEST to the clients that are in a normal state.

Referring to FIG. 11, the first client 200 tries a connection to the server 100 by transmitting a socket setting message Connection Try. The server 100 sets a connection to the first client 200 and transmits a connection acknowledge message Connection Ack. As a result, a socket is set between the first client 200 and the server 100.

The second client 300 also tries a connection to the server 100 by transmitting a socket setting message Connection Try. The server 100 sets a connection to the second client 300 and transmits a connection acknowledge message Connection Ack. As a result, a socket is set between the second client 300 and the server 100.

After setting the respective sockets with the first and second clients 200 and 300, the server 100 transmits the health check request message HC_REQUEST to the first and second clients 200 and 300 at a predetermined time period to check a socket connection of the sockets.

The first and second clients 200 and 300 that have received the health check request message HC_REQUEST from the server 100 transmit the health check response message HC_RESPONSE to the server 100.

The server 100 that has received the health check response message HC_RESPONSE from the first and second clients 200 and 300 transmits a health check request message HC_REQUEST to the first and second clients 200 and 300 when a time to transmit the health check request message HC_REQUEST is reached. Different magic number values are set to the health check request message HC_REQUEST currently being transmitted and previously transmitted health check request message HC_REQUESST.

Similarly, the first and second clients 200 and 300 that have received the health check request message HC_REQUEST from the server 100 transmit the health check response message HC_RESPONSE to the server 100.

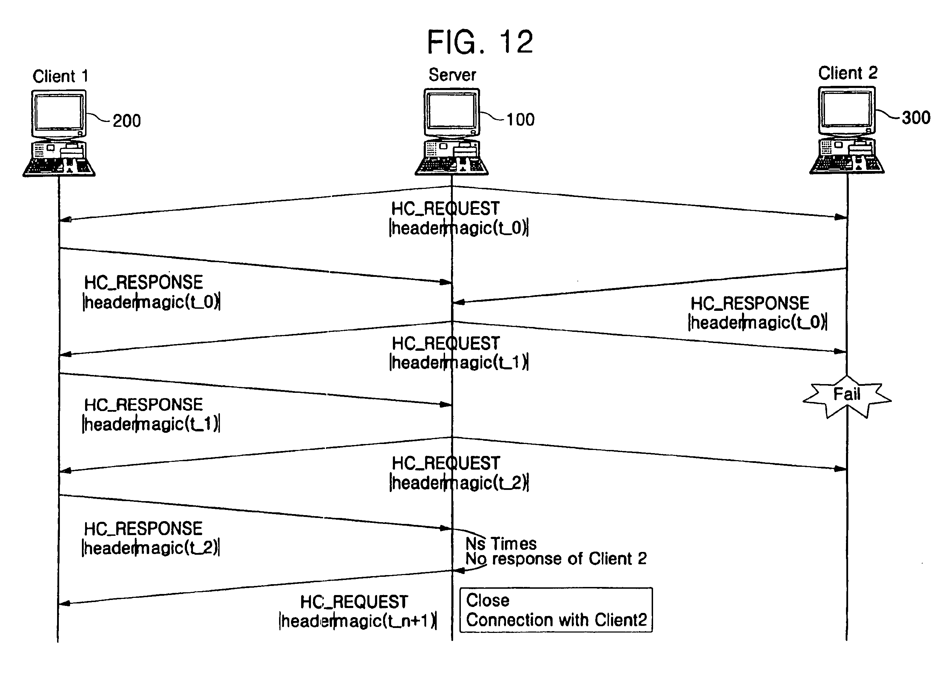

FIG. 12 is a view of finding and processing a client problem using a health check message in accordance with the present invention.

Ts denotes a period that the server 100 transmits a health check request message HC_REQUEST to the clients 200 and 300, and the first threshold value Ns is the maximum number of times that the server 100 waits for a response from the clients from which there is no response. When there is no response message from the clients during the time period Ts*Ns, the server 100 releases the connection.

Referring to FIG. 12, after setting the respective sockets with the first and second clients 200 and 300, the server 100 transmits a health check request message HC_REQUEST to the first and second clients 200 and 300 at a predetermined time to check a socket connection of the sockets.

The first and second clients 200 and 300 that have received the health check request message HC_REQUEST from the server 100 transmit a health check response message HC_RESPONSE to the server 100.

The server 100 that has received the health check response message HC_RESPONSE from the first and second clients 200 and 300 transmits the health check request message HC_REQUEST to the first and second clients 200 and 300 when a time to transmit the health check request message HC_REQUEST is reached. Different magic number values are set to the health check request message HC_REQUEST currently transmitted and to the previously transmitted health check request message HC_REQUESST.

Similarly, the first client 200 that has received the health check request message HC_REQUEST from the server 100 transmits the health check response message HC_RESPONSE to the server 100.

When a problem occurs in the second client 300, the second client 300 cannot transmit the health check response message HC_RESPONSE to the server 100. An error such as power off of the client is an example of a client problem.

When a time to transmit the health check request message HC_REQUEST is reached, the server 100 transmits the health check request message HC_REQUEST to the first and second clients 200 and 300. Different magic number values are set to the health check request message HC_REQUEST currently transmitted and the previously transmitted health check request message HC_REQUEST.

Similarly, the first client 200 that has received the health check request message HC_REQUEST from the server 100 transmits the health check response message HC_RESPONSE to the server 100.

The second client 300 cannot transmit the health check response message HC_RESPONSE to the server 100 since the client problem is not resolved yet.

The server 100 sets a different magic number value for the first client 200 to transmit a health check request message HC_REQUEST when a time to transmit a health check request message HC_REQUEST is reached.

However, when the number of times that the health check response message is not received from the second client 300 exceeds the threshold value Ns, the server 100 releases the socket connection that has been set with the second client 300.

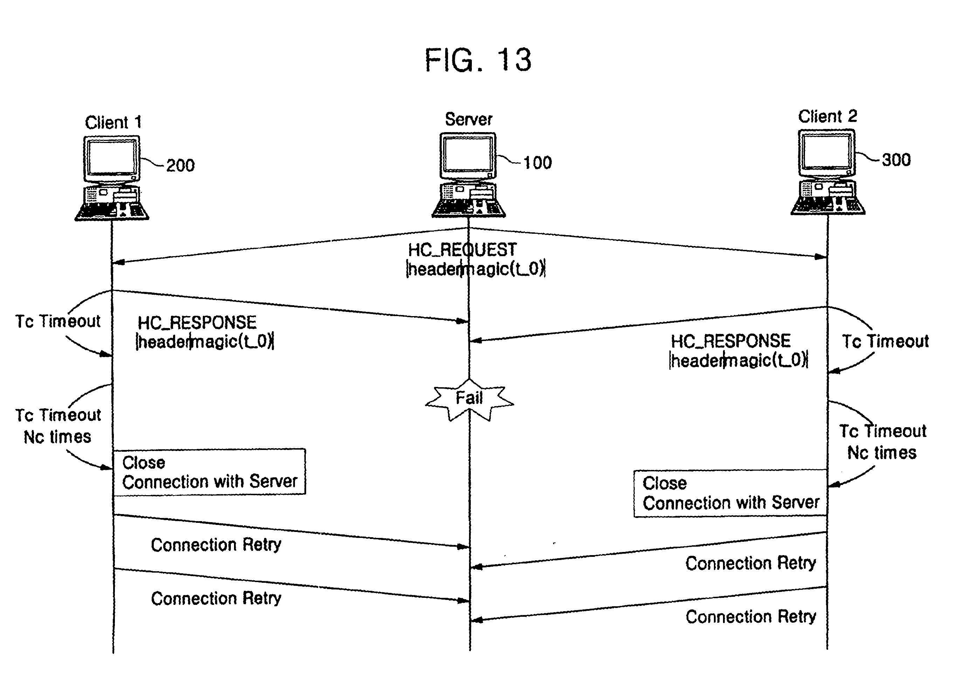

FIG. 13 is a view of finding and processing a server problem by using a health check message in accordance with the present invention.

Tc denotes a period of a time that the clients 200 and 300 wait for receiving the next health check request message HC_REQUEST after receiving the health check request message HC_REQUEST.

Nc denotes the maximum number of times that the clients 200 and 300 wait for the health check request message HC_REQUEST when it does not receive the health check request message HC_REQUEST from the server 100. When there is no message during the time period Tc*Nc, the set socket connection is released.

Referring to FIG. 13, the server 100 transmits the health check request message HC_REQUEST to the first and second clients 200 and 300. The first and second clients 200 and 300 transmit the health check response message HC_RESPONSE to the server 100 in response thereto.

The server 100 transmits the health check request message HC_REQUEST to the first and second clients 200 and 300 at a set time, but the server 100 cannot transmit the health check request message when a problem occurs in the server 100.

An error such as power off of the server is an example of a server problem. In this case, whether or not the client requests a reconnection depends on the application program and thus serves as an option.

After transmitting the health check response message HC_RESPONSE to the server 100, the first and second clients 200 and 300 check whether or not the health check request message has been received from the server 100.

Also, the first and second clients 200 and 300 check a time elapsed after transmitting the health check response message to the server 100. When the number of times that a timeout of the transmission period Tc has occurred exceeds the threshold value Nc, the first and second clients 200 and 300 release the socket connection with the server 100.

Then, the first and second clients 200 and 300 try a new connection to set a new socket with the server 100.

As described above, the system to manage the socket connection and the socket socket connection check method according to the present invention have the following advantages.

A socket connection check, a connection release when the other party's power is off and a reconnection function, which are not provided in a connection-oriented protocol such as a TCP, are implemented in a form of a common library, and thus the application programs can be provided with the corresponding functions using only an interface function of one module.

Thus, the respective application programs can have desired connection management functions to precisely check a socket connection between a server and a client which is required for system management and to provide a fast connection recovery or connection release.

Furthermore, unnecessary work that many application modules have to manage a connection of a socket can be abbreviated and the system to manage the socket connection and the socket connection check method according to the present invention can be efficiently implemented using a library including one module. Thus, when problems such as abnormal power off of the other party or separation of a module occur between network equipment or in a server clustering arrangement, the present invention can be applied to such application programs.

Furthermore, errors such as the reconnection not being rapidly established or the connection release not being rapidly processed in the TCP connection can be rapidly resolved. As a result, a system management that centralizes connection management between the server and the client can be implemented, and the system reliability can be improved.

The forgoing embodiment is merely exemplary and is not to be construed as limiting the present invention. The present teachings can be readily applied to other types of apparatus. The description of the present invention is intended to be illustrative, and not to limit the scope of the claims. Many alternatives, modifications, and variations will be apparent to those skilled in the art.

## Claims

1. A system comprising:
at least one application program module (110) adapted to create a socket necessary to communicate with a server or a client and to call an Application Program Interface API to check a socket connection of the created socket to manage the created socket;
a common library module (120) containing a program adapted to perform an operation set in the called API upon the API being called from the application program module (110); and
a socket check execution module (130), created by executing the coded program in the common library module (120), and adapted to periodically check the socket connection of the created socket,
wherein the API includes at least one of:
a server initialization API (111) adapted to create the socket check execution module;
a server registration API (112) adapted to register the socket in the created socket check execution module to check a socket connection of a certain socket;
a server registration cancel API (113) adapted to cancel registration of a socket registered in the socket check execution module and to check the socket connection;
a server process API (114) adapted to process a socket check message from the client; and
a server release API (115) adapted to release registration of all sockets registered in the socket check execution module and to release the socket check execution module, and
wherein the common library module (120) includes at least one of:
a program adapted to perform a function defined to correspond to a call of a server initialization API (111) to create the socket check execution module;
a program adapted to perform a function defined to correspond to a call of a server registration API (112) to register a socket in the created socket check execution module to check a certain socket connection;
a program adapted to perform a function defined to correspond to a call of a server registration cancel API (112) to cancel registration of the socket registered in the socket check execution module and whose socket connection is being checked;
a program adapted to perform a function defined to correspond to a call of a server process API (114) to process a socket check message received from the client; and
a program adapted to perform a function defined to correspond to a call of a server release API (115) to release registration of all socket registered in the socket check execution module and the socket check execution module.

2. The system of claim 1, wherein the socket check execution module (130) is included in the server and is adapted to periodically transmit a socket check request message to a client to set a certain socket with the server and to periodically check a socket connection of the registered socket according to whether or not a socket check response message has been received from the corresponding client.

3. The system of claim 1, further comprising a Database DB (140) adapted to store state information of the client creating a socket.

4. The system of claim 3, wherein the state information of the client includes a closed state, a sent state, and a normal state according to whether or not a socket check message has been transceived.

5. The system of claim 1, wherein the API includes at least one of:
a client initialization API (211) adapted to create the socket check execution module;
a client process API (212) adapted to process a socket check message received from the server; and
a client release API (213) adapted to release registration of all sockets registered in the socket check execution module.

6. The system of claim 1, wherein the common library module (120) includes at least one of:
a program adapted to perform a function defined to correspond to a call of a client initialization API (211) to create the socket check execution module;
a program adapted to perform a function defined to correspond to a call of a client process API (212) to process a socket check message received from the server; and
a program adapted to perform a function defined to correspond to a call of a client release API (213) to release registration of all sockets registered in the socket check execution module.

7. The system of claim 1, wherein the socket check execution module (130) is included in the client and is adapted to transmit a socket check response message to the server according to a socket check request message periodically transmitted from the server to set a socket with the corresponding client.

8. A method comprising:
an application program module (110) creating a socket, the application program module programmed to create and manage the socket necessary to communicate with one of a server and a client;
the application program module (110) calling an Application Program Interface API defined to check a socket connection of the created socket;
a common library module (120) executing a program to perform an operation set in the called API upon the API being called by the application program module (110); and
a socket check execution mode (130), created by executing the program in the common library module (120), periodically checking a socket connection of the created socket,
wherein the API includes at least one of:
a server initialization API (111) adapted to create the socket check execution module;
a server registration API (112) adapted to register the socket in the created socket check execution module to check a socket connection of a certain socket;
a server registration cancel API (113) adapted to cancel registration of a socket registered in the socket check execution module and to check the socket connection;
a server process API (114) adapted to process a socket check message from the client; and
a server release API (115) adapted to release registration of all sockets registered in the socket check execution module and to release the socket check execution module, and
wherein the common library module (120) includes at least one of:
a program adapted to perform a function defined to correspond to a call of a server initialization API (111) to create the socket check execution module;
a program adapted to perform a function defined to correspond to a call of a server registration API (112) to register a socket in the created socket check execution module to check a certain socket connection;
a program adapted to perform a function defined to correspond to a call of a server registration cancel API (113) to cancel registration of the socket registered in the socket check execution module and whose socket connection is being checked;
a program adapted to perform a function defined to correspond to a call of a server process API (114) to process a socket check message received from the client; and
a program adapted to perform a function defined to correspond to a call of a server release API (115) to release registration of all socket registered in the socket check execution module and the socket check execution module.

9. The method of claim 8, wherein, in periodically checking a socket connection of the created socket, a socket check request message is periodically transmitted to the client to set the socket with the server, and a socket connection of the registered socket is periodically checked according to whether or not a socket check response message has been received from the corresponding client.

10. The method of claim 8, wherein, in periodically checking a socket connection of the created socket, a socket check response message is transmitted to the server according to a socket check request message periodically transmitted from the server.

11. The method of claim 8, wherein the program is included in the server and is programmed to perform:
creating the socket check execution module to check the socket connection of the created socket;
registering the corresponding socket in the created socket check execution module to check the socket connection of the socket; and
periodically transmitting a socket check request message to the client to set the socket with the server by the created socket check execution module to periodically check a socket connection of the registered socket according to whether or not a socket check response message has been received from the corresponding client.

12. The method of claim 8, wherein the program is included in the client and is programmed to perform:
creating the socket check execution module to check the socket connection of the created socket; and
transmitting a socket check response message to the server according to a socket check request message periodically transmitted from the server by the created socket check execution module.

13. The method of claim 8, wherein the program is included in the client and is programmed to perform:
creating the socket check execution module to check the socket connection of the created socket; and
releasing the connected socket by the created socket check execution module when the number of times that a socket check request message periodically transmitted from the server has not received within a set time period exceeds a predetermined number.

14. A method at a server comprising:
An application program module (110) calling a library function storing a program to check a socket connection of a corresponding socket upon the socket with a client being set;
A common library module (120) registering a socket to be periodically checked by executing the called library function; and
A socket check execution module (130) periodically transmitting a socket check request message to the client by executing the called library function and periodically checking a socket connection of the registered socket according to whether or not a socket check response message has been received from the corresponding client,
wherein checking the socket connection of the socket includes:
determining whether or not the socket check response message has been received from the client before timeout of a preset transmission period after the socket check request message to check the socket connection of the socket has been transmitted to the client; and
releasing a socket connection upon there being no response message as a result of the determination and the number of times that the timeout of the transmission period has occurs exceeding a preset threshold value.

15. The method of claim 14, wherein periodically checking a socket connection of the registered socket includes:
obtaining current time information;
adding the obtained current time information to the socket check request message to periodically check the socket connection of the socket and to transmit the socket check request message with the current time information to the client that sets the socket; and
checking the socket connection of the socket according to whether or not the socket check response message has been received from the client.

16. The method of claim 15, wherein checking the socket connection of the socket includes:
determining whether or not the received response message is a normal response message where time information contained in the response message matches with time information stored in the socket check request message transmitted to the client upon the response message being received from the client; and
counting the number of times that abnormal response messages are received and releasing the socket connection with the client when a preset threshold value is exceeded upon the time information not being matched.

17. A method at a client comprising:
An application program module (110) calling a library function storing a program to check a socket connection of a corresponding socket upon the socket with the server being set; and
A socket check execution module (130) periodically transmitting a socket check response message in response to a socket check request message periodically received from the server by executing the called library function and checking the socket connection of the socket set with the server according to whether or not the socket check request message has been periodically received
wherein checking the socket connection of the socket includes:
determining whether or not the socket check request message has been received from the server before timeout of a preset transmission period after the socket check response message has been transmitted to the server; and
releasing the socket connection upon the socket check request message not being received within the timeout of the transmission period as a result of the determination and the number of times that the timeout of the transmission period has occurred exceeds a preset threshold value.

## Patentansprüche

1. System aufweisend:
mindestens ein Anwendungsprogrammmodul (110), das eingerichtet ist, um einen Socket zu kreieren, der zum Kommunizieren mit einem Server oder einem Client gebraucht wird und zum Aufrufen einer Anwendungsprogrammschnittstelle API zum Prüfen einer Socket-Verbindung des kreierten Sockets zum Verwalten des kreierten Sockets;
ein gemeinsames Bibliotheksmodul (120), das ein Programm enthält, das eingerichtet ist zum Ausführen einer Operation, die in der aufgerufenen API gesetzt ist, wenn die API von dem Anwendungsprogrammmodul (110) aufgerufen wurde; und
ein Socket-Prüf-Ausführungsmodul (130), das kreiert wurde durch Ausführen des codierten Programms in dem gemeinsamen Bibliotheksmodul (120) und eingerichtet ist zum periodischen Prüfen der Socket-Verbindung des kreierten Sockets,
wobei die API mindestens eine der Folgenden enthält:
eine Serverinitialisierungs-API (111), die eingerichtet ist zum Kreieren des Socket-Prüfausführungsmoduls;
eine Serverregistrierungs-API (112), die eingerichtet ist zum Registrieren des Sockets in dem kreierten Socket-Prüfausführungsmodul zum Prüfen einer Socket-Verbindung eines bestimmten Sockets;
eine Serverregistrierungsabbruch-API (113), die eingerichtet ist zum Abbrechen der Registrierung eines Sockets, der in dem Socket-Prüf-Ausführungsmodul registriert wird und zum Prüfen der Socket-Verbindung;
eine Serverprozess-API (114), die eingerichtet ist zum Verarbeiten einer Socket-Prüfmeldung von dem Client; und
eine Serverfreigabe-API (115), die eingerichtet ist zum Freigeben der Registrierung von allen Sockets, die in dem Socket-Prüfausführungsmodul registriert sind und zum Freigeben des Socket-Prüfausführungsmoduls, und
wobei das gemeinsame Bibliotheksmodul (120) mindestens eines der Folgenden enthält:
ein Programm, das eingerichtet ist zum Ausführen einer Funktion, die definiert ist, um einem Aufruf einer Serverinitialisierungs-API (111) zu entsprechen, um das Socket-Prüfausführungsmodul zu kreieren;
ein Programm, das eingerichtet ist zum Ausführen einer Funktion, die definiert ist, um einem Aufruf einer Serverregistrierungs-API (112) zu entsprechen, um einen Socket in dem kreierten Socket-Prüfausführungsmodul zu registrieren, um eine bestimmte Socket-Verbindung zu prüfen;
ein Programm, das eingerichtet ist zum Ausführen einer Funktion, die definiert ist, um einem Aufruf einer Serverregistrierungsabbruchs-API (113) zu entsprechen, zum Abbrechen der Registrierung des Sockets, der in dem Socket-Prüfausführungsmodul registriert ist und dessen Socket-Verbindung geprüft wird;
ein Programm, das eingerichtet ist zum Ausführen einer Funktion, die definiert ist, um einem Aufruf einer Serverprozess-API (114) zu entsprechen, zum Verarbeiten einer Socket-Prüfmeldung, die von dem Client empfangen wurde; und
ein Programm, das eingerichtet ist zum Ausführen einer Funktion, die definiert ist, um einem Aufruf einer Serverfreigabe-API (115) zu entsprechen, zum Freigeben der Registrierung von allen Sockets, die in dem Socket-Prüfausführungsmodul registriert sind und das Socket-Prüfausführungsmodul.

2. System nach Anspruch 1, wobei das Socket-Prüfausführungsmodul (130) in dem Server enthalten ist und eingerichtet ist, um periodisch eine Socket-Prüfanforderungsmeldung an einen Client zu übertragen, um einen bestimmten Socket mit dem Server zu setzen und um periodisch eine Socket-Verbindung des registrierten Sockets zu prüfen, ob eine Socket-Prüfantwortmeldung von dem korrespondierenden Client empfangen worden ist oder nicht.

3. System nach Anspruch 1, weist weiterhin eine Datenbasis DB (140) auf, die eingerichtet ist zum Speichern von Zustandsinformation des Clients, der einen Socket kreiert.

4. System nach Anspruch 3, wobei die Zustandsinformation des Clients einen Abschlusszustand, einen Gesendetzustand und einen Normalzustand enthält, gemäß ob eine Socket-Prüfmeldung gesendet und empfangen worden ist oder nicht.

5. System nach Anspruch 1, wobei die API mindestens eine der Folgenden enthält:
eine Client-Initialisierungs-API (211), die eingerichtet ist zum Kreieren des Socket-Prüfausführungsmoduls;
eine Client-Prozess-API (212), die eingerichtet ist zum Verarbeiten einer Socket-Prüfmeldung, die empfangen von dem Server wird; und
eine Client-Freigabe-API (213), die eingerichtet ist zum Freigeben der Registrierung von allen Sockets, die in dem Socket-Prüfausführungsmodul registriert sind.

6. System nach Anspruch 1, wobei das gemeinsame Bibliotheksmodul (120) mindestens eines der Folgenden enthält:
ein Programm, das eingerichtet ist zum Ausführen einer Funktion, die definiert ist, um einem Aufruf einer Client-Initialisierungs-API (211) zu entsprechen, zum Kreieren des Socket-Prüfausführungsmoduls;
ein Programm, das eingerichtet ist zum Ausführen einer Funktion, die definiert ist, um einem Aufruf einer Client-Prozess-API (212) zu entsprechen, um eine Socket-Prüfmeldung zu verarbeiten, die von dem Server empfangen wird; und
ein Programm, das eingerichtet ist zum Ausführen einer Funktion, die definiert ist, um einem Aufruf einer Client-Freigabe-API (213) zu entsprechen, zum Freigeben der Registrierung von allen Sockets, die in dem Socket-Prüfausführungsmodul registriert sind.

7. System nach Anspruch 1, wobei das Socket-Prüfausführungsmodul (130) in dem Client enthalten ist und eingerichtet ist, um eine Socket-Prüfantwortmeldung an den Server zu übertragen gemäß einer Socket-Prüfanforderungsmeldung, die periodisch von dem Server übertragen wurde zum Setzen eines Sockets mit dem korrespondierenden Client.

8. Verfahren aufweisend:
ein Anwendungsprogrammmodul (110), das einen Socket kreiert, wobei das Anwendungsprogrammmodul programmiert ist zum Kreieren und Verwalten des Sockets, der notwendig ist zum Kommunizieren mit einem Server und einem Client;
das Anwendungsprogrammmodul (110), wobei das eine Anwendungsprogrammschnittstelle API aufruft, die definiert ist zum Prüfen einer Socket-Verbindung des kreierten Sockets;
ein gemeinsames Bibliotheksmodul (120), das ein Programm ausführt zum Durchführen einer Operation, die in der aufgerufenen API gesetzt ist, nachdem die API durch das Anwendungsprogrammmodul (110) aufgerufen ist; und
ein Socket-Prüfausführungsmodul (130), das kreiert wird durch Ausführen des Programms in dem gemeinsamen Bibliotheksmodul (120), das periodisch eine Socket-Verbindung des kreierten Sockets prüft,
wobei die API mindestens eine der Folgenden enthält:
eine Serverinitialisierungs-API (111), die eingerichtet ist zum Kreieren des Socket-Prüfausführungsmoduls;
eine Serverregistrierungs-API (112), die eingerichtet ist zum Registrieren des Sockets in dem kreierten Socket-Prüfausführungsmodul zum Prüfen einer Socket-Verbindung eines bestimmten Sockets;
eine Serverregistrierungsabbruchs-API (113), die eingerichtet ist zum Abbrechen der Registrierung eines Sockets, der in dem Socket-Prüfausführungsmodul registriert ist und zum Prüfen der Socket-Verbindung;
eine Serverprozess-API (114), die eingerichtet ist zum Verarbeiten einer Socket-Prüfmeldung von dem Client; und
eine Serverfreigabe-API (115), die eingerichtet ist zum Freigeben der Registrierung von allen Sockets, die in dem Socket-Prüfausführungsmodul registriert sind und zum Freigeben des Socket-Prüfausführungsmoduls und
wobei das gemeinsame Bibliotheksmodul (120) mindestens eines der Folgenden enthält:
ein Programm, das eingerichtet ist zum Ausführen einer Funktion, die definiert ist, um einem Aufruf einer Serverinitialisierungs-API (111) zu entsprechen, zum Kreieren des Socket-Prüfausführungsmoduls;
ein Programm, das eingerichtet ist zum Ausführen einer Funktion, die definiert ist, um einem Aufruf einer Serverregistrierungs-API (112) zu entsprechen, zum Registrieren eines Sockets in dem kreierten Socket-Prüfausführungsmodul zum Prüfen einer bestimmten Socket-Verbindung;
ein Programm, das eingerichtet ist zum Ausführen einer Funktion, die definiert ist, um einem Aufruf einer Serverregistrierungsabbruchs-API (113) zu entsprechen, zum Abbrechen der Registrierung des Sockets, der in dem Socket-Prüfausführungsmodul registriert ist und dessen Socket-Verbindung geprüft wird;
ein Programm, das eingerichtet ist zum Ausführen einer Funktion, die definiert ist, um einem Aufruf einer Serverprozess-API (114) zu entsprechen, zum Verarbeiten einer Socket-Prüfmeldung, die von dem Client empfangen wurde; und
ein Programm, das eingerichtet ist zum Ausführen einer Funktion, die definiert ist, um einem Aufruf einer Serverfreigabe-API (115) zu entsprechen, zum Freigeben der Registrierung von allen Sockets, die in dem Socket-Prüfausführungsmodul registriert sind und dem Socket-Prüfausführungsmodul.

9. Verfahren nach Anspruch 8, wobei beim periodischen Prüfen einer Socket-Verbindung des kreierten Sockets, eine Socket-Prüfanforderungsmeldung periodisch an den Client übertragen wird, um den Socket mit dem Server zu setzen, und eine Socket-Verbindung des registrierten Sockets wird periodisch geprüft, gemäß ob eine Socket-Prüfantwortmeldung von dem korrespondierenden Client empfangen worden ist oder nicht.

10. Verfahren nach Anspruch 8, wobei beim periodischen Prüfen einer Socket-Verbindung des kreierten Sockets, eine Socket-Prüfantwortmeldung an den Server übertragen wird gemäß einer Socket-Prüfanforderungsmeldung, die periodisch von dem Server übertragen wird.

11. Verfahren nach Anspruch 8, wobei das Programm in dem Server enthalten ist und programmiert ist, um auszuführen:
Kreieren des Socket-Prüfausführungsmoduls zum Prüfen der Socket-Verbindung des kreierten Sockets;
Registrieren des korrespondierenden Sockets in dem kreierten Socket-Prüfausführungsmodul, um die Socket-Verbindung des Sockets zu prüfen; und
periodisches Übertragen einer Socket-Prüfanforderungsmeldung an den Client, um den Socket mit dem Server durch den kreierten Socket-Prüfausführungsmodul zu setzen, zum periodischen Prüfen einer Socket-Verbindung des registrierten Sockets, gemäß ob eine Socket-Prüfantwortmeldung von dem korrespondierenden Client empfangen worden ist oder nicht.

12. Verfahren nach Anspruch 8, wobei das Programm in dem Client enthalten ist und programmiert ist, um auszuführen:
Kreieren des Socket-Prüfausführungsmoduls zum Prüfen der Socket-Verbindung des kreierten Sockets; und
Übertragen einer Socket-Prüfantwortmeldung an den Server gemäß einer Socket-Prüfanforderungsmeldung, die periodisch von dem Server durch das kreierte Socket-Prüfausführungsmodul übertragen wird.

13. Verfahren nach Anspruch 8, wobei das Programm in dem Client enthalten ist und programmiert ist, um auszuführen:
Kreieren des Socket-Prüfausführungsmoduls zum Prüfen der Socket-Verbindung des kreierten Sockets; und
Freigeben des verbundenen Sockets durch das kreierte Socket-Prüfausführungsmodul, wenn die Anzahl der Fälle, in denen eine Socket-Prüfanforderungsmeldung, die periodisch von dem Server übertragen wurde, in einer gesetzten Zeitdauer nicht empfangen worden ist, eine vorbestimmte Anzahl überschreitet.

14. Verfahren in einem Server aufweisend:
ein Anwendungsprogrammmodul (110) ruft eine Bibliotheksfunktion auf zum Speichern eines Programmes zum Prüfen einer Socket-Verbindung eines korrespondierenden Sockets nachdem der Socket mit einem Client gesetzt wurde;
ein gemeinsames Bibliotheksmodul (120) registriert einen Socket, um periodisch durch Ausführen der aufgerufenen Bibliotheksfunktion geprüft zu werden; und
ein Socket-Prüfausführungsmodul (130) überträgt periodisch eine Socket-Prüfanforderungsmeldung an den Client durch Ausführen der aufgerufenen Bibliotheksfunktion und periodisches Prüfen einer Socket-Verbindung des registrierten Sockets, gemäß ob eine Socket-Prüfantwortmeldung von dem korrespondierenden Client empfangen worden ist oder nicht,
wobei das Prüfen der Socket-Verbindung des Sockets enthält:
Bestimmen, ob die Socket-Prüfantwortmeldung von dem Client vor Zeitablauf einer vorgesetzten Übertragungszeitdauer empfangen worden ist oder nicht, nachdem die Socket-Prüfanforderungsmeldung zum Prüfen der Socket-Verbindung des Sockets an den Client übertragen worden ist; und
Freigeben einer Socket-Verbindung nachdem es keine Antwortmeldung gab infolge des Bestimmens und die Anzahl der Fälle, in denen der Zeitablauf der Übertragungszeitdauer auftrat, einen voreingestellten Schwellwert überschreitet.

15. Verfahren nach Anspruch 14, wobei periodisches Prüfen einer Socket-Verbindung des registrierten Sockets enthält:
Erhalten der aktuellen Zeitinformation;
Hinzufügen der erhaltenen aktuellen Zeitinformation zu der Socket-Prüfanforderungsmeldung zum periodischen Prüfen der Socket-Verbindung des Sockets und zum Übertragen der Socket-Prüfanforderungsmeldung mit der aktuellen Zeitinformation an den Client, der den Socket setzt; und
Prüfen der Socket-Verbindung des Sockets, gemäß ob die Socket-Prüfantwortmeldung von dem Client empfangen worden ist oder nicht.

16. Verfahren nach Anspruch 15, wobei das Prüfen der Socket-Verbindung des Sockets enthält:
Bestimmen, ob die empfangene Antwortmeldung eine normale Antwortmeldung ist oder nicht, in der Zeitinformation, die in der Antwortmeldung enthalten ist, übereinstimmt mit der Zeitinformation, die in der Socket-Prüfanforderungsmeldung gespeichert ist, die an den Client übertragen wurde, nachdem die Antwortmeldung von dem Client empfangen wurde; und
Zählen der Anzahl der Fälle, in denen abnormale Antwortmeldungen empfangen wurden und Freigeben der Socket-Verbindung mit dem Client, wenn ein voreingestellter Schwellwert überschritten wird, nachdem die Zeitinformation nicht zusammenpasst.

17. Verfahren in einem Client aufweisend:
ein Anwendungsprogrammmodul (110) ruft eine Bibliotheksfunktion auf, die ein Programm speichert, um eine Socket-Verbindung eines korrespondierenden Sockets zu prüfen, nachdem der Socket mit dem Server gesetzt ist;
ein Socket-Prüfausführungsmodul (130) überträgt periodisch eine Socket-Prüfantwortmeldung in Antwort auf eine Socket-Prüfanforderungsmeldung, die periodisch von dem Server durch Ausführen der aufgerufenen Bibliotheksfunktion empfangen wurde und Prüfen der Socket-Verbindung des Sockets, der mit dem Server gesetzt ist, gemäß ob die Socket-Prüfanforderungsmeldung periodisch empfangen worden ist oder nicht,
wobei das Prüfen der Socket-Verbindung des Sockets enthält:
Bestimmen, ob die Socket-Prüfanforderungsmeldung von dem Server vor Zeitablauf einer voreingestellten Übertragungsperiode empfangen worden ist oder nicht, nachdem die Socket-Prüfantwortmeldung an den Server übertragen worden ist; und
Freigeben der Socket-Verbindung, nachdem die Socket-Prüfanforderungsmeldung nicht innerhalb des Zeitablaufs der Übertragungszeitdauer empfangen worden ist infolge des Bestimmens und die Anzahl der Fälle, in denen der Zeitablauf der Übertragungsperiode auftrat, einen voreingestellten Schwellwert überschreitet.

## Revendications

1. Système comportant :
au moins un module (110) de programme d'application conçu pour créer un connecteur logiciel nécessaire pour communiquer avec un serveur ou un client et pour appeler une interface de programme d'application, API, afin de vérifier une connexion logicielle du connecteur logiciel créé pour gérer le connecteur logiciel créé ;
un module de bibliothèque commune (120) contenant un programme conçu pour exécuter une opération établie dans l'interface API appelée lorsque l'interface API est appelée à partir du module de programme d'application (110) ; et
un module (130) d'exécution de vérification de connecteur logiciel, créé en exécutant le programme codé dans le module de bibliothèque commune (120), et conçu pour vérifier périodiquement la connexion logicielle du connecteur logiciel créé,
dans lequel l'interface API comprend au moins l'une de :
une API (111) d'initialisation de serveur conçue pour créer le module d'exécution de vérification de connecteur logiciel ;
une API (112) d'enregistrement de serveur conçue pour enregistrer le connecteur logiciel dans le module d'exécution de vérification de connecteur logiciel créé afin de vérifier une connexion logicielle d'un certain connecteur logiciel ;
une API (113) d'annulation d'enregistrement de serveur conçue pour annuler l'enregistrement d'un connecteur logiciel enregistré dans le module d'exécution de vérification de connecteur logiciel et pour vérifier la connexion logicielle ;
une API (114) de traitement de serveur conçue pour traiter un message de vérification de connecteur logiciel provenant du client ; et
une API (115) de libération de serveur conçue pour libérer un enregistrement de tous les connecteurs logiciels enregistrés dans le module d'exécution de vérification de connecteur logiciel et pour libérer le module d'exécution de vérification de connecteur logiciel, et
dans lequel le module de bibliothèque commune (120) comprend au moins l'un de :
un programme conçu pour exécuter une fonction définie de façon à correspondre à un appel d'une API (111) d'initialisation de serveur afin de créer un module d'exécution de vérification de connecteur logiciel ;
un programme conçu pour exécuter une fonction définie de façon à correspondre à un appel d'une API (112) d'enregistrement de serveur pour enregistrer un connecteur logiciel dans le module d'exécution de vérification de connecteur logiciel créé afin de vérifier une certaine connexion logicielle ;
un programme conçu pour exécuter une fonction définie de façon à correspondre à un appel d'une API (113) d'annulation d'enregistrement de serveur pour annuler l'enregistrement du connecteur logiciel enregistré dans le module d'exécution de vérification de connecteur logiciel et dont la connexion logicielle est en cours de vérification ;
un programme conçu pour exécuter une fonction définie de façon à correspondre à un appel d'une API (114) de traitement de serveur pour traiter un message de vérification de connecteur logiciel reçu du client ; et
un programme conçu pour exécuter une fonction définie afin de correspondre à un appel d'une API (115) de libération de serveur pour libérer l'enregistrement de tous les connecteurs logiciels enregistrés dans le module d'exécution de vérification de connecteur logiciel et le module d'exécution de vérification de connecteur logiciel.

2. Système selon la revendication 1, dans lequel le module (130) d'exécution de vérification de connecteur logiciel est inclus dans le serveur et est conçu pour transmettre périodiquement un message de demande de vérification de connecteur logiciel à un client afin d'établir un certain connecteur logiciel avec le serveur et pour vérifier périodiquement une connexion logicielle du connecteur logiciel enregistré selon qu'un message de réponse de vérification de connecteur logiciel a été reçu ou non du client correspondant.

3. Système selon la revendication 1, comportant en outre une base de données DB (140) conçue pour stocker une information d'état du client créant un connecteur logiciel.

4. Système selon la revendication 3, dans lequel l'information d'état du client comprend un état fermé, un état envoyé et un état normal selon qu'un message de vérification de connecteur logiciel a été émis-reçu ou non.

5. Système selon la revendication 1, dans lequel l'API comprend au moins l'une de :
une API (211) d'initialisation de client conçue pour créer le module d'exécution de vérification de connecteur logiciel ;
une API (212) de traitement de client conçue pour traiter un message de vérification de connecteur logiciel reçu du serveur ; et
une API (213) de libération de client conçue pour libérer l'enregistrement de tous les connecteurs logiciels enregistrés dans le module d'exécution de vérification de connecteur logiciel.

6. Système selon la revendication 1, dans lequel le module de bibliothèque commune (112) comprend au moins l'un de :
un programme conçu pour exécuter une fonction définie afin de correspondre à un appel d'une API (211) d'initialisation de client pour créer le module d'exécution de vérification de connecteur logiciel ;
un programme conçu pour exécuter une fonction définie de façon à correspondre à un appel d'une API (212) de traitement de client pour traiter une message de vérification de connecteur logiciel reçu du serveur ; et
un programme conçu pour exécuter une fonction définie de façon à correspondre à un appel d'une API (213) de libération de client pour libérer l'enregistrement de tous les connecteurs logiciels enregistrés dans le module d'exécution de vérification de connecteur logiciel.

7. Système selon la revendication 1, dans lequel le module (130) d'exécution de vérification de connecteur logiciel est inclus chez le client et est conçu pour transmettre un message de réponse de vérification de connecteur logiciel au serveur conformément à un message de demande de vérification de connecteur logiciel émis périodiquement du serveur pour établir un connecteur logiciel avec le client correspondant.

8. Procédé comprenant :
un module (110) de programme d'application créant un connecteur logiciel, le module de programme d'application étant programmé pour créer et gérer le connecteur logiciel nécessaire pour communiquer avec l'un d'un serveur et d'un client ;
le module (110) de programme d'application appelant une interface de programme d'application API définie pour vérifier une connexion logicielle du connecteur logiciel créé ;
un module de bibliothèque commune (120) exécutant un programme pour exécuter une opération établie dans l'API appelée lorsque l'API est appelée par le module (110) de programme d'application ; et
un mode (130) d'exécution de vérification de connecteur logiciel, créé en exécutant le programme dans le module de bibliothèque commune (120), vérifiant périodiquement une connexion logicielle du connecteur logiciel créé,
dans laquelle l'API comprend au moins l'une de :
une API (111) d'initialisation de serveur conçue pour créer le module d'exécution de vérification de connecteur logiciel ;
une API (112) d'enregistrement de serveur conçue pour enregistrer le connecteur logiciel dans le module d'exécution de vérification de connecteur logiciel créé afin de vérifier une connexion logicielle d'un certain connecteur logiciel ;
une API (113) d'annulation d'enregistrement de serveur conçue pour annuler l'enregistrement d'un connecteur logiciel enregistré dans le module d'exécution de vérification de connecteur logiciel et pour vérifier la connexion logicielle ;
une API (114) de traitement de serveur conçue pour traiter un message de vérification de connecteur logiciel provenant du client ; et
une API (115) de libération de serveur conçue pour libérer un enregistrement de tous les connecteurs logiciels enregistrés dans le module d'exécution de vérification de connecteur logiciel et pour libérer le module d'exécution de vérification de connecteur logiciel, et
dans lequel le module de bibliothèque commune (120) comprend au moins l'un de :
un programme conçu pour exécuter une fonction définie de façon à correspondre à un appel d'une API (111) d'initialisation de serveur pour créer le module d'exécution de vérification de connecteur logiciel ;
un programme conçu pour exécuter une fonction définie de façon à correspondre à un appel d'une API (112) d'enregistrement de serveur pour enregistrer un connecteur logiciel dans le module d'exécution de vérification de connecteur logiciel créé afin de vérifier une certaine connexion logicielle ;
un programme conçu pour exécuter une fonction définie de façon à correspondre à un appel d'une API (113) d'annulation d'enregistrement de serveur pour annuler l'enregistrement du connecteur logiciel enregistré dans le module d'exécution de vérification de connecteur logiciel et dont la connexion logicielle est en cours de vérification ;
un programme conçu pour exécuter une fonction définie de façon à correspondre à un appel d'une API (114) de traitement de serveur pour traiter un message de vérification de connecteur logiciel reçu du client ; et
un programme conçu pour exécuter une fonction définie de façon à correspondre à un appel d'une API (115) de libération de serveur pour libérer l'enregistrement de tous les connecteurs logiciels enregistrés dans le module d'exécution de vérification de connecteur logiciel et le module d'exécution de vérification de connecteur logiciel.

9. Procédé selon la revendication 8, dans lequel, dans une vérification périodique d'une connexion logicielle du connecteur logiciel créé, un message de demande de vérification de connecteur logiciel est transmis périodiquement au client pour établir le connecteur logiciel avec le serveur, et une connexion logicielle du connecteur logiciel enregistré est vérifiée périodiquement selon qu'un message de réponse de vérification de connecteur logiciel a été reçu ou non du client correspondant.

10. Procédé selon la revendication 8, dans lequel, dans une vérification périodique d'une connexion logicielle du connecteur logiciel créé, un message de réponse de vérification de connecteur logiciel est transmis au serveur conformément à un message de demande de vérification de connecteur logiciel transmis périodiquement du serveur.

11. Procédé selon la revendication 8, dans lequel le programme est inclus dans le serveur et est programmé pour effectuer :
la création du module d'exécution de vérification de connecteur logiciel pour vérifier la connexion logicielle du connecteur logiciel créé ;
l'enregistrement du connecteur logiciel correspondant dans le module d'exécution de vérification de connecteur logiciel créé pour vérifier la connexion logicielle du connecteur logiciel ; et
la transmission périodique d'un message de demande de vérification de connecteur logiciel au client pour établir le connecteur logiciel avec le serveur par le module d'exécution de vérification de connecteur logiciel créé afin de vérifier périodiquement une connexion logicielle du connecteur logiciel enregistré selon qu'un message de réponse de vérification de connecteur logiciel a été reçu ou non du client correspondant.

12. Procédé selon la revendication 8, dans lequel le programme est inclus chez le client et est programmé pour effectuer :
la création du module d'exécution de vérification de connecteur logiciel pour vérifier la connexion logicielle du connecteur logiciel créé ; et
la transmission d'un message de réponse de vérification de connecteur logiciel au serveur selon un message de demande de vérification de connecteur logiciel transmis périodiquement du serveur par le module d'exécution de vérification de connecteur logiciel créé.

13. Procédé selon la revendication 8, dans lequel le programme est inclus chez le client et est programmé pour effectuer :
la création du module d'exécution de vérification de connecteur logiciel pour vérifier la connexion logicielle du connecteur logiciel créé ; et
la libération du connecteur logiciel connecté par le module d'exécution de vérification de connecteur logiciel créé lorsque le nombre de fois qu'un message de demande de vérification de connecteur logiciel transmis périodiquement du serveur n'a pas été reçu dans une période de temps établie dépasse un nombre prédéterminé.

14. Procédé au niveau d'un serveur, comprenant :
un module de programme d'application (110) appelant une fonction de bibliothèque stockant un programme pour vérifier une connexion logicielle d'un connecteur logiciel correspondant lors de l'établissement du connecteur logiciel avec un client ;
un module (120) de bibliothèque commune enregistrant un connecteur logiciel devant être vérifié périodiquement par l'exécution de la fonction de bibliothèque appelée ; et
un module (130) d'exécution de vérification de connecteur logiciel transmettant périodiquement un message de demande de vérification de connecteur logiciel au client en exécutant la fonction de bibliothèque appelée et vérifiant périodiquement une connexion logicielle du connecteur logiciel enregistré selon qu'un message de réponse de vérification de connecteur logiciel a été reçu ou non du client correspondant,
dans lequel la vérification de la connexion logicielle du connecteur logiciel comprend :
le fait de déterminer si le message de réponse de vérification de connecteur logiciel a été reçu ou non du client avant l'expiration d'une période d'émission préétablie après que le message de demande de vérification de connecteur logiciel pour vérifier la connexion logicielle du connecteur logiciel a été transmis au client ; et
la libération d'une connexion logicielle à la suite de l'absence de message de réponse en résultat de la détermination et du nombre de fois que l'expiration de la période de transmission a eu lieu au-delà d'une valeur de seuil préétablie.

15. Procédé selon la revendication 14, dans lequel la vérification périodique d'une connexion logicielle du connecteur logiciel enregistré comprend :
l'obtention d'une information de temps en cours ;
l'addition de l'information de temps en cours obtenue au message de demande de vérification de connecteur logiciel pour vérifier périodiquement la connexion logicielle du connecteur logiciel et pour transmettre le message de demande de vérification de connecteur logiciel avec l'information de temps en cours au client qui établit le connecteur logiciel ; et
la vérification de la connexion logicielle du connecteur logiciel selon que le message de réponse de vérification de connecteur logiciel a été reçu ou non du client.

16. Procédé selon la revendication 15, dans lequel la vérification de la connexion logicielle du connecteur logiciel comprend :
le fait de déterminer si le message de réponse reçu est ou non un message de réponse normal où une information de temps contenue dans le message de réponse concorde avec une information de temps stockée dans le message de demande de vérification de connecteur logiciel transmis au client à la suite de la réception du message de réponse du client ; et
le comptage du nombre de fois que des messages de réponse anormaux sont reçus et la libération de la connexion logicielle avec le client lorsqu'une valeur de seuil préétablie est dépassée à la suite d'un défaut de concordance de l'information de temps.

17. Procédé au niveau d'un client, comprenant :
un module (110) de programme d'application appelant une fonction de bibliothèque stockant un programme pour vérifier une connexion logicielle d'un connecteur logiciel correspondant lors de l'établissement du connecteur logiciel avec le serveur ; et
un module (130) d'exécution de vérification de connecteur logiciel émettant périodiquement un message de réponse de vérification de connecteur logiciel en réponse à un message de demande de vérification de connecteur logiciel reçu périodiquement du serveur en exécutant la fonction de bibliothèque appelée et vérifiant la connexion logicielle du connecteur logiciel établi avec le serveur selon que le message de demande de vérification de connecteur logiciel a été reçu périodiquement ou non,
dans lequel la vérification de la connexion logicielle du connecteur logiciel comprend :
le fait de déterminer si le message de demande de vérification de connexion logicielle a été reçu ou non du serveur avant l'expiration d'une période d'émission préétablie après que le message de réponse de vérification de connecteur logiciel a été transmis au serveur ; et
la libération de la connexion logicielle après que le message de demande de vérification de connecteur logiciel n'a pas été reçu avant l'expiration de la période d'émission en résultat de la détermination et du nombre de fois où l'expiration de la période d'émission a eu lieu dépasse une valeur de seuil préétablie.
